Europäisches Patentamt

(19) European Patent Office

Office européen des brevets

(11) Publication number: **0 254 688 B1**

(12) **EUROPEAN PATENT SPECIFICATION**

(45) Date of publication of patent specification :
09.01.91 Bulletin 91/02

(51) Int. Cl.$^5$: **B60K 17/34**

(21) Application number: 87830249.6

(22) Date of filing: 01.07.87

(54) Permanent four-wheel drive transmission for a motor vehicle with a transverse engine.

(30) Priority: 14.07.86 IT 6756486

(43) Date of publication of application:
27.01.88 Bulletin 88/04

(45) Publication of the grant of the patent:
09.01.91 Bulletin 91/02

(84) Designated Contracting States:
DE ES FR GB SE

(56) References cited:
DE-A- 3 334 905
DE-C- 3 428 865
FR-A- 1 368 385
FR-A- 2 168 839
FR-A- 2 561 180
GB-A- 804 775
US-A- 3 955 442
US-A- 3 999 447

(73) Proprietor: FIAT AUTO S.p.A.
Corso Giovanni Agnelli 200
I-10135 Torino (IT)

(72) Inventor: Falzoni, Gianluigi
Via Malta 36 Int. 10 Bis
I-10141 Torino (IT)
Inventor: Cordero, Frederico
Via Passo Buole 166
I-10135 Torino (iT)

(74) Representative: Buzzi, Franco et al
c/o Jacobacci-Casetta & Perani S.p.A. Via
Alfieri, 17
i-10121 Torino (IT)

## Description

The present invention relates in general to permanent four-wheel drive transmissions for motor vehicles with transverse engines, including a gearbox having an output member which drives an epicyclic front differential driving the half-shafts of the front wheels of the vehicle.

More particularly, the invention refers to a four-wheel drive transmission of the type set forth in the pre-characterising part of claim 1.

A four-wheel drive transmission of the above-mentioned type is known from FR-A-2561180.

The object of the invention is to provide a more compact transmission as compared with that known from the above prior reference, and this object is achieved by virtue of the features recited in the characterising portion of claim 1.

The invention will now be described in detail with reference to the appended drawings, provided purely by way of non-limiting example, in which :

Figure 1 is a schematic perspective view of a four-wheel drive transmission according to the invention, and

Figure 2 is a partially sectioned view of a detail of the transmission of Figure 1.

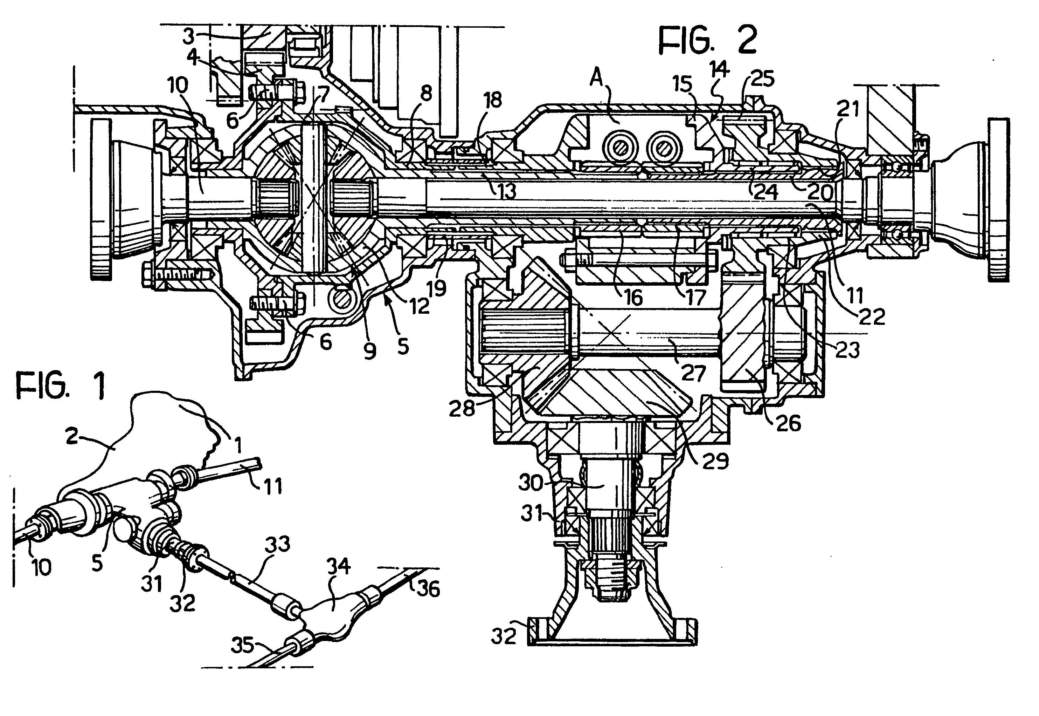

In Figure 1, an internal combustion engine, schematically indicated 1, is intended for mounting in the front part of a motor vehicle with its axis transverse the longitudinal axis of the vehicle, indicated A in Figure 2. The engine 1 has a gearbox 2, normally of the type with constantly meshed gears, having a main shaft and a driven shaft (not illustrated) also arranged transverse the longitudinal axis A of the vehicle.

A gear 3 is carried by the driven shaft of the gearbox and meshes with a crown gear 4 supported for rotation by a casing, generally indicated 5, fixed to the gearbox housing.

The crown gear 4 is fixed by screws 6 to a hollow hub 7 also supported for rotation by the casing 5 and having a tubular appendage 8. In practice, the gear 4 and the hub 7 define a housing containing a front differential 9 of the epicyclic type with bevel gears, which can transmit torque to the front wheels of the motor vehicle through two half-shafts 10, 11 in the manner explained below. The front differential 9 includes a box 12 having a tubular appendage 13 which extends coaxially along a portion of the half-shaft 11 and is partly surrounded coaxially by the tubular appendage 8 of the hub 7.

An intermediate differential, generally and schematically indicated 14, acts as a torque divider of the type made and sold under the trade name TORSEN-GLEASON. The differential 14, which is also housed in the casing 5, is generally (see for instance GB-A-804775) of known type and will not therefore be described in detail. For the purposes of the present invention, it suffices to say that it includes a box 15 constituting the input member and two adjacent planet gears 16, 17 constituting the output members.

The box 15, on the side of the front differential 9, has a tubular appendage 18 which coaxially surrounds the tubular appendage 13 and is coupled for rotation to the tubular appendage 8 of the hub 7 by means of a splined sleeve 19.

The two planet gears 16 and 17 of the intermediate differential 14 are located coaxially with the half-shaft 11 and mesh internally with respective terminal sets of teeth carried by the tubular appendage 13 of the box 12 of the front differential 9 and by a hollow shaft 20 which coaxially surrounds the half-shaft 11, on the extension of this tubular appendage 13.

The hollow shaft 20 has a set of teeth 21 at its outer end which meshes with a corresponding set of teeth 22 of a tubular hub 23 which coaxially surrounds a tubular appendage 24 of the box 15 on its side opposite the tubular appendage 18. The hub 23 carries a ring gear 25 which meshes with a gear 26 carried by one end of an intermediate shaft 27 also supported for rotation by the casing 5. The shaft 27 is adjacent and parallel to the half-shaft 11 and, at its opposite end, carries a bevel gear 28 which meshes with a bevel pinion 29 located at the inner end of a shaft 30 rotatably supported within a cylindrical appendage 31 of the casing 5 disposed along the longitudinal axis A of the vehicle. The end of the shaft 30 opposite the bevel pinion 29 is connected by a constant-speed universal joint, generally indicated 32 in Figure 1, to a transmission shaft 33 for transmitting torque to a rear differential 34 of conventional type. The differential 34 transmits torque to the half-shafts 35, 36 of the rear wheels of the vehicle.

In operation, the torque imparted by the output gear 3 of the gearbox is transmitted to the box 15 of the TORSEN-GLEASON differential 14 through the hub 7, the tubular appendage 8 thereof, the sleeve 19, and the tubular appendage 18. The drive is then transmitted by the planet gears 16 and 17, respectively, to the box 12 of the front differential 9 through the hollow shaft 13, and to the rear differential 34 through the hollow shaft 20, the gears 25 and 26, the shaft 27, the bevel gearing 28 and 31, and the shafts 30 and 33.

The TORSEN-GLEASON differential 14, by virtue of its characteristics of transparency to the torques coming from the front and rear wheels, acts as a torque divider between the front half-shafts 10, 11 and the rear half-shafts 35, 36, while preventing the transfer of braking torques between the two axles, for example in a release phase.

## Claims

1. Permanent four-wheel drive transmission for a motor vehicle with a transverse engine (1) comprising a gearbox (2) having an output member (3) which drives an epicyclic front differential (9) driving the half-shafts (10, 11) of the front wheels of the vehicle, the said four-wheel drive transmission comprising a differential (14) acting as a torque divider disposed coaxially on one of the front half-shafts (11) and including a box (15) rotatable by the output member of the gearbox (3), and two coaxial output members (16, 17) which rotate two hollow shafts (13, 20) coaxial with the said front half-shaft (11) and of which one is fixed to the box (12) of the front differential (9), and a rear differential (34) for transmitting torque to the half-shafts (35, 36) of the rear wheels of the vehicle driven by the other of the two hollow shafts (20) through a transmission system including a pair of output bevel gears (28, 29), characterised in that the torque divider is of the TORSEN-GLEASON type (14) and in that the said other hollow shaft (20) has a set of teeth (21) at its outer end meshing with a corresponding set of teeth (22) of a tubular hub (23) surrounding coaxially an outer tubular appendage (24) of the torque divider (14) box (15) ; the said hub (23) carrying a ring gear (25) meshing with a gear (26) carried by an intermediate shaft (27) adjacent and parallel to the said front half-shaft (11) ; one of the said bevel gears (28) being fixed to the said intermediate shaft (27) and the other being connected kinematically to the rear differential (34).

2. Device according to Claim 1 characterised in that the front differential (9), the TORSEN-GLEASON torque divider (14), and the transmission unit (25, 26, 27, 28, 29, 30) are housed in a common casing fixed to the gearbox (5).

## Ansprüche

1. Permante Vierrad-Antriebs-Transmission für ein Kraftfahrzeug mit querstehendem Motor (1)

mit einem Schaltgetriebe (2) mit einem Ausgangsglied (3), das ein epizyklisches vorderes Differential (9) für den Antrieb der Halbwellen (10, 11) der Vorderräder antreibt,

wobei die Vierrad-Antriebs-Transmission folgende Teile umfaßt :

– ein Differential (14), das als Drehmomentverteiler koaxial auf einer der vorderen Halbwellen (11) angeordnet ist und einen durch das Ausgangsglied des Schaltgetriebes (3) drehbaren Kasten (15) und zwei koaxiale Ausgangsglieder (16, 17) umfaßt, die zwei koaxial zu der genannten vorderen Halbwelle (11) angeordnete Hohlwellen (13, 20) antreiben, von denen eine an dem Kasten (12) des vorderen Differentials (9) befestigt ist, ·

– sowie ein hinteres Differential (34) zur Übertragung von Drehmoment auf die Halbwellen (35, 36) der Hinterräder des Kraftfahrzeugs, das über ein Transmissionssystem mit zwei Ausgangs-Kegelzahnrädern (28, 29) von einer der beiden Hohlwellen (20) angetrieben wird, dadurch gekennzeichnet, daß der Drehmomentverteiler (14) ein Drehmomentverteiler vom TORSEN-GLEASON-Typ ist

daß die genannte andere Hohlwelle (20) an ihrem äußeren Ende einen Satz von Zähnen (21) trägt, die mit einem korrespondieren- den Satz von Zähnen (22) einer rohrförmigen Nabe (23) kämmen, die einen äußeren rohrförmigen Ansatz (24) des Kastens (15) des Drehmomentverteilers (14) umgibt, wobei die Nabe (23) einen Zahnring (25) trägt, der mit einem von einer Zwischenwelle (27) getragenen Zahnrad (26) kämmt, die in der Nähe der und parallel zu der genannten vorderen Halbwelle (11) angeordnet ist,

und daß eines der beiden Kegelzähnräder (28) an dieser Zwischenwelle (27) befestigt und das andere Kegelzahnrad kinematisch mit dem hinteren Differential (34) verbunden ist.

2. Vorrichtung nach Anspruch 1, dadurch gekennzeichnet, daß das vordere Differential (9), der TORSEN-GLEASON-Drehmomentverteiler (14) und die Transmissionsseinheit (25, 26, 27, 28, 29, 30) in einem an dem Schaltgetriebe (5) befestigten gemeinsamen Gehäuse aufgenommen sind.

## Revendications

1. Transmission intégrale ou à quatre roues motrices permanente pour un véhicule automobile possédant un moteur transversal (1), comprenant une boîte de vitesses (2) ayant un élément de sortie (3) qui entraîne un différentiel avant épicycloïdal (9) entraînant lui-même les demi-arbres (10, 11) des roues avant du véhicule, ladite transmission à quatre roues motrices comprenant un différentiel (14) se comportant comme un diviseur de couple, disposé coaxialement sur l'un des demi-arbres avant (11) et comprenant un boîtier (15) qui est entraîné en rotation par l'élément de sortie de la boîte de vitesses (3) et deux éléments de sortie coaxiaux (16, 17) qui font tourner deux arbres creux (13, 20) coaxiaux audit demi- arbre avant (11), et dont l'un est fixé au boîtier (12) du différentiel avant (9), et un différentiel arrière (34) destiné à transmettre le couple aux demi-arbres (35, 36) des roues arrière du véhicule, qui est entraîné par l'autre des deux arbres creux (20) par intermédiaire d'un système de transmission comprenant un couple de pignons coniques de sortie (28, 29), caractérisé en ce que le diviseur de couple est du type TORSEN-GLEASON (14) et en ce que ledit autre arbre creux (20) présente à son extrémité extérieure une denture (21) qui engrène avec une denture correspondante (22) d'un moyeu tubulaire (23) qui entoure coaxialement un prolongement tubulaire extérieur (24) du boîtier (15) du diviseur de couple (14) ; ledit moyeu (23) porte une couronne dentée (25) qui engrène avec une roue dentée (26) portée par un arbre intermédiaire (27) adjacent et parallèle audit demi-arbre avant (11) ; l'un des pignons coniques (28) étant fixé audit arbre intermédiaire (27) et l'autre étant relié cinématiquement au différentiel arrière (34).

2. Dispositif selon la revendication 1, caractérisé en ce que le différentiel avant (9), le diviseur de couple TORSEN-GLEASON (14) et l'unité de transmission (25, 26, 27, 28, 29, 30) sont enfermés dans un carter commun fixé à la boîte de vitesses (5).

FIG. 2

FIG. 1